(19) Europäisches Patentamt
European Patent Office
Office européen des brevets

(11) **EP 2 491 608 B1**

(12) **FASCICULE DE BREVET EUROPEEN**

(45) Date de publication et mention de la délivrance du brevet:
**16.04.2014 Bulletin 2014/16**

(51) Int Cl.:
*H01M 8/02* *(2006.01)*   *C01G 49/00* *(2006.01)*
*C01G 3/00* *(2006.01)*   *C01G 45/00* *(2006.01)*
*C01G 51/00* *(2006.01)*   *C01G 53/00* *(2006.01)*

(21) Numéro de dépôt: **10785123.0**

(22) Date de dépôt: **15.10.2010**

(86) Numéro de dépôt international:
**PCT/FR2010/052196**

(87) Numéro de publication internationale:
**WO 2011/048307 (28.04.2011 Gazette 2011/17)**

(54) **INTERCONNECTEUR POUR PILE À COMBUSTIBLE ET ÉLECTROLYSEUR À ÉLECTROLYTE SOLIDE FONCTIONNANT À HAUTE TEMPÉRATURE**

INTERKONNEKTOR FÜR EINE HOCHTEMPERATUR-FESTOXIDBRENNSTOFFZELLE UND ELEKTROLYSEZELLE

INTERCONNECTOR FOR A HIGH-TEMPERATURE SOLID OXIDE FUEL CELL AND ELECTROLYSER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2009 FR 0957421**

(43) Date de publication de la demande:
**29.08.2012 Bulletin 2012/35**

(73) Titulaire: **Electricité de France**
**75008 Paris (FR)**

(72) Inventeurs:
• **ZAHID, Mohsine**
**65385 Ruedesheim Am Rhein (DE)**
• **SAOUTIEFF, Elise**
**F-38200 Vienne (FR)**

(74) Mandataire: **Cabinet Plasseraud**
**52, rue de la Victoire**
**75440 Paris Cedex 09 (FR)**

(56) Documents cités:
**DE-A1-102005 015 755    DE-A1-102007 018 261**
**US-A1- 2009 155 667**

• **BODAK O ET AL: "Microstructure, crystal structure and electrical properties of Cu0.1Ni0.8Co0.2Mn1.9O4 ceramics obtained at different sintering conditions", JOURNAL OF ALLOYS AND COMPOUNDS, ELSEVIER SEQUOIA, LAUSANNE, CH LNKD- DOI: 10.1016/S0925-8388(02)00675-8, vol. 347, no. 1-2, 16 décembre 2002 (2002-12-16), pages 14-23, XP004392714, ISSN: 0925-8388**

EP 2 491 608 B1

**Description**

La présente invention concerne un interconnecteur pour piles à combustible ou pour électrolyseurs, tous deux à électrolyte solide et fonctionnant à haute température, comprenant un substrat en acier inoxydable revêtu d'une couche de protection non poreuse, imperméable aux espèces volatiles de chrome.

Des dispositifs électrochimiques tels que les piles à combustible à électrolyte solide (SOFC, de l'anglais *Solide Oxide Fuel Cell)* et les électrolyseurs haute température (EHT) sont des dispositifs constitués généralement d'un empilement de plusieurs cellules élémentaires reliées entre elles par des interconnecteurs. Le rôle premier de l'interconnecteur dans ces dispositifs est d'assurer le contact électrique entre les différentes cellules.

Généralement, ces dispositifs électrochimiques fonctionnent à des températures comprises entre 600 et 1000°C, ce qui soumet les interconnecteurs à des contraintes thermiques importantes. Une caractéristique essentielle que doit présenter un interconnecteur pour SOFC ou EHT est une haute résistance à l'oxydation à la température de fonctionnement. En outre, le matériau de l'interconnecteur, pour être compatible avec les composants en céramique de la cellule, doit avoir un coefficient de dilatation thermique environ $10.10^{-6}$ $K^{-1}$ à $13.10^{-6}$ $K^{-1}$, ce qui est relativement faible pour un métal.

Il a été découvert que des alliages contenant du chrome possédaient ces propriétés et convenaient bien comme matériau pour interconnecteur. Par exemple, les alliages habituellement utilisés en tant qu'interconnecteur de SOFC et d'EHT sont le Crofer 22 APU de la société Thyssen Krups, l'ITM de la société Plansee et le ZMG 232 de la société Hitachi Metals. Ces alliages ferritiques à base de chrome contenant du manganèse forment à haute température, sous conditions oxydantes, une double couche d'oxydes de $MnCr_2O_4 / Cr_2O_3$ présentant une résistance électrique importante. A haute température, c'est-à-dire entre 300 et 1200°C, cette couche d'oxyde de chrome réagit avec l'oxygène et $H_2O$ pour former du trioxyde de chrome $CrO_3$ et/ou de l'hydroxyde d'oxyde de chrome ($CrO_2(OH)_2$, $CrO(OH)_4$). Ces composés de Cr(IV) sont volatiles à ces températures et peuvent être transportés vers la cathode ou vers l'interface électrolyte/cathode, où ils vont réagir avec les matériaux de la cathode. Cet empoisonnement de la cathode peut conduire à une dégradation des performances de la cellule SOFC ou de l'électrolyseur.

Une des solutions pour minimiser les effets de la formation d'oxyde de chrome est le dépôt, à la surface de l'interconnecteur métallique, d'une couche de protection destinée à retenir les espèces volatiles de chrome.

Une telle couche de protection doit présenter plusieurs caractéristiques qui sont :

-    une conductivité électrique élevée, ce qui équivaut à une résistance électrique faible, qui peut être évaluée par la mesure de la résistance spécifique de surface (ASR) ;
-    une densité élevée ;
-    une stabilité chimique élevée sous atmosphère oxydante et réductrice, aux températures de fonctionnement de la cellule contenant l'interconnecteur ;
-    une longue durée de vie, nécessaire puisque les cellules sont amenées à fonctionner sur de longues périodes, soit environ 40.000 heures ;
-    une bonne adhérence au support et un coefficient de dilatation thermique (CET) proche de celui du support ;
-    une grande résistance mécanique ;
-    un faible coût.

Il a été proposé dans la littérature de recouvrir la surface de l'interconnecteur avec une couche de protection riche en aluminium. Cependant, cela crée une résistance électrique excessive entre l'électrode et l'interconnecteur. De plus, l'empoisonnement de l'électrode par les vapeurs de chrome est seulement retardé et non empêché.

Plusieurs auteurs ont proposé différentes formulations de couches de protection composées d'éléments de transition. Ces couches se distinguent par leurs propriétés électriques, thermiques et leur stabilité thermodynamique.

Larring en 2000 (Y. Larring, T. Norby, "Spinel and perovskite functional layers between plansee metallic interconnect (Cr - 5% wt, Fe - 1% wt, Y2O3) and ceramic (La0.85Sr0.15)0.91MnO3 cathode materials for SOFC", Electrochemical Society, 147, issue 9, p3251-3256, 2000), en utilisant des alliages à base de chrome, a été le premier à suggérer un revêtement de type spinelle $(Mn,Co)_3O_4$ permettant de réduire la diffusion des espèces volatiles de chrome.

Par la suite, différentes spinelles ont été étudiées en tant que revêtements de protection sur des interconnecteurs :

Zahid en 2004 (M. Zahid, F. Tietz, D. Sebold, H.P. Buchkremer, "Reactive Coatings against Chromium Evaporation in Solid Oxide Fuel Cells", Proceedings Sixth European Solid Oxide Fuel Cell Forum (Ed.: M. Mogensen), Vol. 2, p 820-827, Luzerne, Switzerland, 2004) a travaillé sur l'alliage Crofer 22 APU spécialement conçu pour être utilisé comme interconnecteur dans les SOFC. Le dépôt d'une spinelle de formule $Co_3O_4$ par pulvérisation de poudres humides (*Wet Powder Spraying* (WPS)) a montré des résultats encourageants, mais cette couche présente une ASR de 60 m$\Omega$.cm$^2$ à 800°C sous air, considérée comme trop élevée.

Kiefer en 2006 (T. Kiefer, M. Zahid, F. Tietz, D. Stöver, H-R. Zerfass, "Interaction between Protective Coating and Metallic Interconnect Used for SOFC Applications", Proceedings Seventh European Solid Oxide Fuel Cell Forum, P0803, 2006) a, quant à lui, considéré des spinelles de formule $MnCo_2O_4$ et $MnCo_{2-x}Fe_xO_4$ déposées sur le Crofer 22 APU par WPS. L'ajout du manganèse au cobalt permet, d'après les travaux de Ling en 2005 (H. Ling, A. Petric, "Electrical and thermal properties of spinels", Electrochemical Society Proceedings, Volume 2005-07, p 1866- 1873, 2005), de diminuer fortement la résistance électrique de la couche. Malgré une réduction intéressante de l'ASR de 30 m$\Omega$.cm$^2$ par rapport à un interconnecteur non revêtu, en parti grâce à l'insertion d'une couche de contact entre la couche de protection et la cathode, le coût du procédé de dépôt et de l'alliage reste trop important. De plus la couche déposée est poreuse ce qui constitue un inconvénient important.

Basu en 2005 (Basu R.N, N.Knott, A. Petric, "Development of a CuFe2O4 interconnect coating", Electrochemical Society Proceedings, N°7, p1859-1865, 2005) a utilisé l'électrodéposition pour déposer une couche de $CuFe_2O_4$ sur un alliage commercial UNS-430. Cette spinelle a été étudiée puisque le coefficient de dilatation thermique (CET) de cette couche serait plus proche de celui de l'alliage. De plus, l'ajout de cuivre est une alternative pour éventuellement augmenter la conductivité. Or, non seulement la phase de traitement thermique pour former la couche de spinelle est longue (plusieurs jours), mais il a été constaté qu'il se forme non pas une unique phase spinelle $CuFe_2O_4$ mais plusieurs phases ce qui crée des problèmes d'instabilité thermique à long terme.

Yang en 2005 (Z. Yang, G-G.Xia, J. W. Stevenson, "Mn1.5Co1.5O4 Spinel Protection Layers on Ferritic Stainless Steels for SOFC Interconnect Applications", Electrochemical and Solid-State Letters, 8, Issue 3, pA168-A170, 2005) a proposé une spinelle de formule $Mn_{1,5}Co_{1,5}O_4$ déposée par sérigraphie (*screen-printing*) sur le Crofer 22 APU. Le procédé pour obtenir et densifier la couche désirée est fastidieux. Il comporte plusieurs étapes nécessitant différentes atmosphères de traitement thermique. De plus, l'alliage utilisé reste coûteux.

Reza Bateni en 2007 (M. Reza Bateni, P. Wei, X.Deng, A.Petric, "Spinel coatings for UNS 430 stainless steel interconnects", Surface and Coatings Technology, 201, p 4677-4684, 2007) s'est intéressé à la spinelle $Cu_{1,4}Mn_{1,6}O_4$. Tout comme Basu en 2005, le procédé utilisé est l'électrodéposition sur l'alliage UNS-430. L'ajout de cuivre combiné au manganèse améliore la conductivité électrique et le CET. Cependant, la couche formée est hétérogène en composition et présente plusieurs phases, ce qui la rend instable thermiquement.

Enfin, Montero en 2008 (Montero X, F. Tietz, D. Sebold, H.P. Buchkremer, A. Ringuede, M. Cassir, A. Laresgoiti , I. Villarreal, "MnCo1.9Fe0.1O4 spinel protection layer on commercial ferritic steels for interconnect applications in solid oxide fuel cells", Journal of Power Sources, 184,p 172-179, 2008) a appliqué la couche de $MnCo_{1,9}Fe_{0,1}O_4$, spécifique au Crofer 22 APU, à l'alliage K41X d'ArcelorMittal utilisé en tant qu'interconnecteur. Mais l'ASR de 38 m$\Omega$.cm$^2$ peut être encore améliorée.

On remarque que l'ensemble des spinelles étudiées sont des spinelles combinant deux ou, au plus, trois métaux de transition.

Il est du mérite de la Demanderesse d'avoir mis au point un nouvel oxyde métallique de type spinelle contenant quatre, voire cinq métaux de transition différents, qui peut être déposé ou formé *in situ* sur un substrat en acier inoxydable, et qui constitue alors une couche de protection non poreuse, imperméable aux espèces volatiles de chrome, et qui convient parfaitement à la protection d'interconnecteurs pour SOFC ou EHT.

La présente invention a pour objet un interconnecteur pour piles à combustible à électrolyte solide (SOFC) ou pour électrolyseurs haute température (EHT), comprenant un substrat en acier inoxydable revêtu d'une couche de protection non poreuse, imperméable aux espèces volatiles de chrome, ladite couche de protection étant de type spinelle et répondant à la formule (I)

$$(I) \qquad Co_{1,7+x}Mn_{0,6-x}Cu_{0,45-a}Ni_{a+b}Fe_{0,25-b}O_4$$

où $0 \leq a \leq 0,45$ et $0 \leq b \leq 0,05$ et $-0,3 < x < 0,3$, de préférence $x = 0$.

Elle a également pour objet deux procédés de fabrication d'un tel interconnecteur, décrits plus en détail ci-après.

La présente invention a en outre pour objet une pile à combustible à électrolyte solide contenant au moins un interconnecteur selon l'invention et un électrolyseur haute température contenant au moins un interconnecteur selon l'invention.

Enfin, à la connaissance de la Demanderesse, l'oxyde métallique de type spinelle répondant à la formule (I)

$$(I) \qquad Co_{1,7+x}Mn_{0,6-x}Cu_{0,45-a}Ni_{a+b}Fe_{0,25-b}O_4$$

où $0 \leq a \leq 0,45$ et $0 \leq b \leq 0,05$ et $-0,3 < x < 0,3$, de préférence $x = 0$, n'a jusqu'ici jamais été décrit et constitue par conséquent également un objet de la présente invention.

Cet oxyde métallique de type spinelle s'est révélé avoir des propriétés intéressantes car il est capable de former une couche dense, imperméable aux espèces volatiles de chrome, présentant une résistance électrique très faible et montrant une grande stabilité dans la durée à haute température sous atmosphère oxydante. De plus, il peut être préparé par des procédés standard et peu coûteux.

L'interconnecteur selon la présente invention comprend un substrat en acier inoxydable revêtu d'une couche de protection non poreuse, imperméable aux espèces volatiles de chrome.

Le terme « acier inoxydable » désigne une grande famille d'aciers qui présentent une grande résistance à la corrosion, à l'oxydation à chaud et au fluage. C'est un acier essentiellement allié au chrome, élément qui lui confère sa bonne résistance à l'oxydation, et au nickel, élément qui lui confère de bonnes propriétés mécaniques. Par définition, un acier inoxydable contient au moins 10,5 % de chrome et moins de 1,2 % de carbone.

De préférence, le substrat utilisé dans la présente invention est un acier inoxydable commercial ayant la composition suivante (les pourcentages ci-dessous sont des pourcentages massiques) :

| C | Mn | Si | Ni | Cr | N | Ti | Nb |
|---|---|---|---|---|---|---|---|
| 0-0,02 % | 0,1-2 % | 0-0,5 % | 0,05-0,3 % | 14-24 % | 0-0,015 % | 0,1-0,3 % | 0,2-0,6 % |

On utilisera de préférence l'acier K41X produit par ArcelorMittal, présentant la composition suivante

| C | Mn | Si | Ni | Cr | N | Ti | Nb |
|---|---|---|---|---|---|---|---|
| 0,02 % | 0,5 % | 0,5 % | 0,110 % | 17,5 % | 0,015 % | 0,2 % | 0,5 % |

Cet acier inoxydable présente l'avantage d'être peu coûteux.

Le substrat en acier inoxydable est revêtu d'une couche de protection non poreuse, imperméable aux espèces volatiles de chrome. Cette couche de protection est en oxyde métallique de type spinelle répondant à la formule (I)

$$(I) \qquad Co_{1,7+x}Mn_{0,6-x}Cu_{0,45-a}Ni_{a+b}Fe_{0,25-b}O_4$$

où $0 \leq a \leq 0,45$ et $0 \leq b \leq 0,05$ et $-0,3 \leq x \leq 0,3$.

Une spinelle désigne un groupe de minéraux de formule générale $(X^{2+})(Y^{3+})_2(O^{2-})_4$, où $X^{2+}$ représente un ou plusieurs cation(s) métalliques divalent(s) et $Y^{3+}$ un ou plusieurs cation(s) métalliques trivalent(s). La structure des spinelles consiste en un empilement compact cubique à faces centrées d'oxygène, les cations divalents et les cations trivalents occupant les sites à coordination tétraédrique et les sites à coordination octaédrique.

Cette couche de protection est dense et particulièrement adaptée à un acier inoxydable. Elle présente une résistance électrique très faible, ce qui permet de produire des interconnecteurs revêtus d'une couche de protection ayant une ASR généralement inférieure à 35 m$\Omega$.cm$^2$. Cette couche de protection montre également une grande stabilité dans la durée à haute température sous atmosphère oxydante. En outre, elle est particulièrement efficace comme couche imperméable aux espèces volatiles de chrome.

De préférence, l'oxyde métallique de type spinelle formant la couche de protection de l'interconnecteur selon l'invention répond à l'une des formules (Ia), (Ib) et (Ic) suivantes :

$$(Ia) \qquad Co_{1,7}Mn_{0,6}Cu_{0,45}Fe_{0,25}O_4,$$

$$(Ib) \qquad Co_{1,7}Mn_{0,6}Ni_{0,45}Fe_{0,25}O_4,$$

et

$$(Ic) \qquad Co_{1,7}Mn_{0,6}Cu_{0,3}Ni_{0,2}Fe_{0,2}O_4.$$

La couche de protection a avantageusement une épaisseur comprise entre 2 et 50 $\mu$m (micromètres), de préférence entre 5 et 30 $\mu$m.

Les recherches actuelles laissent penser que la conductivité élevée de la couche de spinelle de la présente invention est liée à la présence d'un grand nombre d'ions de différentes valences dans la maille cristallographique. Cette spinelle comprend en effet, non pas deux ou trois métaux différents, comme celles passées en revue dans l'introduction de la présente demande, mais quatre voire cinq métaux différents. La présence simultanée d'éléments ayant une sous-couche électronique d partiellement remplie facilite les déplacements des électrons, qui confèrent au matériau ses propriétés conductrices.

La présente invention a également pour objet deux procédés de fabrication de l'interconnecteur tel que décrit ci-dessus.

Le premier procédé de fabrication comprend les étapes successives suivantes :

a) le dépôt, sur un substrat en acier inoxydable, d'une ou de plusieurs couches métalliques comprenant du manganèse, du cobalt et au moins un élément choisi parmi le nickel et le cuivre ;
b) l'oxydation du dépôt effectué à l'étape a) par traitement thermique du substrat revêtu à une température comprise entre 800°C et 1000°C, pendant une durée comprise entre 8h et 12h, dans une atmosphère oxydante.

Au cours de l'étape (b) s'effectue non seulement l'oxydation des métaux déposés au cours de l'étape (a), mais on constate également la diffusion d'atomes provenant du substrat en acier sous-jacent dans les couches métalliques déposées au cours de l'étape (a). Cette diffusion et cette oxydation conduit à la formation de deux couches particulières :

- une première couche d'oxyde de chrome-manganèse, directement en contact avec le substrat en acier inoxydable ;
- une seconde couche en oxyde métallique de type spinelle, qui recouvre directement la première couche d'oxyde de chrome manganèse.

C'est cette seconde couche en oxyde métallique de type spinelle qui constitue une couche de protection de l'interconnecteur et qui présente les avantages d'être non poreuse et imperméable aux espèces volatiles de chrome. La spinelle ainsi formée est composée des trois ou quatre éléments métalliques déposés au cours de l'étape (a), d'atomes de fer provenant de l'acier sous-jacent et d'atomes d'oxygène résultant de l'oxydation des métaux, et la stoechiométrie de cette composition dépend directement des quantités respectives des métaux déposés à l'étape (a) et des conditions opératoires de l'oxydation de l'étape (b).

Eventuellement, il est possible d'effectuer, préalablement au dépôt de la ou des couche(s) métallique(s), une ou plusieurs étapes destinées à préparer le substrat, en particulier destinées à le dégraisser. Il peut s'agir par exemple d'une étape de trempage dans un bain d'éthanol ou d'eau, contenant de préférence un agent tensioactifs et/ou soumis à des ultrasons.

Lors de l'étape (a), les couches métalliques peuvent être déposées selon des techniques de traitement de surface bien connues de l'homme du métier.

On peut citer en tant que techniques de dépôt préférées, le dépôt physique en phase vapeur (PVD), l'électrodéposition et le dépôt non électrolytique.

De façon plus préférée, le dépôt de l'étape (a) est effectué de la façon suivante :

- dépôt d'une première couche de manganèse par PVD,
- dépôt, par électrodéposition, d'une deuxième couche d'un élément choisi parmi le nickel et le cuivre,
- éventuellement dépôt, par électrodéposition, d'une troisième couche d'un élément choisi parmi le nickel et le cuivre, absent de la deuxième couche,
- dépôt d'une dernière couche de cobalt par électrodéposition.

Le dépôt physique en phase vapeur (PVD de l'anglais *physical vapor deposition)* est un terme général bien connu de l'homme du métier qui recouvre des techniques de dépôt sous vide de films minces, résultant de la condensation de la forme vaporisée d'un matériau sur une surface. Les deux principales méthodes sont la pulvérisation cathodique (*sputtering* selon la terminologie anglo-saxonne) et l'évaporation. Le contrôle de la quantité de matière déposée par PVD est réalisé en contrôlant la durée cette étape.

L'électrodéposition d'éléments métalliques est également une technique bien connue de l'homme du métier. Elle peut être effectuée dans une cellule électrochimique à trois électrodes. Le substrat forme la cathode et est immergé dans l'électrolyte. L'anode utilisée est formée par le métal à déposer. L'électrode de référence est typiquement une électrode Ag/AgCl avec une concentration en KCl de 1 mole/L. Les dépôts sont typiquement effectués en mode galvanostatique. L'électrolyte utilisé dans la cellule électrochimique est préparé à partir de sels de sulfate du métal que l'on souhaite déposer.

Le contrôle de la quantité de matière déposée par électrodéposition est réalisé en calculant le temps nécessaire au dépôt avec un courant imposé, selon la loi de Faraday:

$$n = \frac{I \times t}{nb \times F},$$

où n est la quantité de matière déposée (en mole),
I est l'intensité du courant (en A),

t est la durée du dépôt (en s),
nb est le nombre d'électrons échangés dans la réaction, et
F = 96485 C.mol$^{-1}$ est la constante de Faraday.

L'épaisseur des dépôts peut également être déduite de la loi de Faraday :

$$Epaisseur(cm) = \frac{I \times t \times M}{nb \times F \times \rho \times S}$$

où I est l'intensité du courant (en A),
t est la durée du dépôt (en s),
M est la masse molaire du métal (en g/mol),
nb est le nombre d'électrons échangés dans la réaction,
F = 96485 C.mol$^{-1}$ est la constante de Faraday,
p est la masse volumique (en g.cm$^{-3}$), et
S est la surface du dépôt (en cm$^2$)

Lors de la mise en oeuvre du procédé selon l'invention, les différents métaux sont déposés au cours de l'étape (a) en des quantités qui respectent les rapports en poids suivant :

Pour 1 partie en poids de Cu et/ou de Ni, on déposera de 12 à 18 parties en poids de Mn et de 20 à 35 parties en poids de Co, le rapport pondéral Co/Mn étant compris entre 1,6 et 2,0.

Il est fait l'approximation que les éléments déposés s'oxydent totalement pour former un oxyde de type spinelle après traitement thermique.

De préférence, les proportions molaires des métaux déposés sont choisies parmi:

(IIa) $\quad Co_{1,9}Mn_{1,05}Cu_{0,05}$

(IIb) $\quad Co_{1,9}Mn_{1,05}Ni_{0,05}$

(IIc) $\quad Co_{1,707}Mn_{1,147}Cu_{0,073}Ni_{0,073}$

A l'étape (b) du procédé de fabrication de l'interconnecteur selon l'invention, le dépôt effectué à l'étape (a) est oxydé. Pour cela, ledit dépôt est traité thermiquement à une température comprise entre 800°C et 1000°C, de préférence entre 840°C et 950°C, pendant une durée comprise entre 8h et 12h, de préférence entre 9h et 11h, dans une atmosphère oxydante. De préférence, le dépôt est traité thermiquement à une température comprise entre 840°C et 860°C pendant environ 10h. Cette étape d'oxydation sert à former *in situ* la couche de protection grâce à deux processus :

- la couche métallique déposée lors de l'étape (a) est entièrement oxydée ;
- le fer provenant du substrat en acier inoxydable diffuse dans la couche métallique et se combine avec les trois ou quatre métaux déposés (Co, Mn, et Ni et/ou Cu), formant ainsi la spinelle de formule (I) à 4 ou 5 éléments (Fe, Co, Mn, et Ni et/ou Cu).

Le deuxième procédé de fabrication de l'interconnecteur selon l'invention comprend le dépôt, sur un substrat en acier inoxydable, d'une poudre d'oxyde métallique de type spinelle répondant à la formule (I)

(I) $\quad Co_{1,7+x}Mn_{0,6-x}Cu_{0,45-a}Ni_{a+b}Fe_{0,25-b}O_4$

où $0 \leq a \leq 0,45$ et $0 \leq b \leq 0,05$ et $-0,3 < x < 0,3$, de préférence x = 0,
par projection thermique utilisant une torche à plasma d'arc soufflé dans l'air sous pression atmosphérique.

La poudre d'oxyde métallique de type spinelle répondant à la formule (I)

(I) $\quad Co_{1,7+x}Mn_{0,6-x}Cu_{0,45-a}Ni_{a+b}Fe_{0,25-b}O_4$

où $0 \leq a \leq 0,45$ et $0 \leq b \leq 0,05$ et $-0,3 < x < 0,3$,
a de préférence une granulométrie comprise entre 5 et 40 $\mu$m.

Ladite poudre d'oxyde métallique peut être fabriquée à partir de poudre de CoO, de $Fe_2O_3$, de CuO, de $Mn_3O_4$

et de NiO.

L'interconnecteur selon la présente invention est particulièrement adapté aux piles à combustible à électrolyte solide (SOFC) et aux électrolyseurs haute température (EHT). La présente invention a donc également pour objet les piles à combustible à électrolyte solide contenant au moins un interconnecteur selon la présente invention, et les électrolyseurs haute température contenant au moins un interconnecteur selon l'invention.

Dans ces dispositifs électrochimiques, il est possible d'insérer, entre la couche de protection et l'électrode, une couche de contact. Par exemple, l'utilisation de couches de contact de type $La_{0,8}Sr_{0,2}Co_{0,5}Mn_{0,5}O_3$ a déjà été décrite dans le passé (Z. Yang, G. Xia, P. Singh, J. W. Stevenson, "Electrical contacts between cathodes and metallic interconnects in solid oxide fuel cells", Journal of Power Sources 155 (2006) 246-252, et T. Kiefer, M. Zahid, F. Tietz, D. Stöver, H.-R. Zerfass, "Interaction between Protective Coating and Metallic Interconnect Used for SOFC Applications", P0803, Lucerne, 2006). Le rôle de cette couche de contact est de diminuer la résistance de la couche de protection.

## EXEMPLE

### 1. Fabrication d'interconnecteurs revêtus d'une couche de protection :

### 1.1. Matériel

Un substrat en acier inoxydable K41X commercialisé par la société ArcelorMittal non poli est dégraissé à l'éthanol dans un bain à ultrasons. Les tailles d'échantillons sont:

- 20 x 20 x 1,5 mm et
- 20 x 20 x 1,5 mm percé (diamètre = 6 mm).

Sur chaque échantillon, deux fils de platine (diamètre = 0,25 mm et 0,5 mm) ont été ajoutés afin de permettre les connexions électriques lors de la mesure de l'ASR.

### 1.2. Dépôt des éléments métalliques

Une couche de manganèse métallique est déposée sur le substrat par dépôt physique en phase vapeur (PVD) à partir d'une cible de manganèse pur.

Plus précisément, le dépôt par PVD de la couche de manganèse est effectué dans une machine de pulvérisation cathodique. Les substrats en acier K41X, placés sur le porte échantillon tournant, ont été dégraissés à l'eau savonneuse, puis un décapage ionique a été effectué dans l'enceinte PVD pour enlever les impuretés restantes. La source en manganèse est chauffée sous vide poussé (environ $10^{-6}$ Torr) jusqu'à évaporation. Les atomes ainsi vaporisés sont recueillis sur le substrat dont la surface est maintenue à une température plus faible que le matériau à déposer.

Les autres éléments métalliques sont ensuite déposés par électrodéposition.

L'électrodéposition est effectuée dans une cellule électrochimique à trois électrodes. Le substrat, formant la cathode, est immergé dans l'électrolyte. L'anode utilisée est en cobalt dans le cas du dépôt de cobalt, en nickel dans le cas du dépôt de nickel, en cuivre dans le cas du dépôt du cuivre. L'électrode de référence est une électrode Ag/AgCl avec une concentration en KCl de 1 mole/L. Les dépôts sont effectués sur la surface de l'interconnecteur par électrodéposition en mode galvanostatique. Les faibles densités de courant de déposition de 20 mA.cm$^{-2}$ sont contrôlées à l'aide d'un potenstiostat/galvanostat de modèle PAR 283 (Princeton Applied Research) piloté par le logiciel CoreWare Version 2. L'électrolyte est chauffé à une température de 50°C.

Les électrolytes (200mL) utilisés sont préparés à partir de sels de sulfate métalliques :

- pour le dépôt électrochimique d'une couche de nickel : utilisation de sulfate de nickel

    0,2 M de sulfate de nickel $NiSO_4$ (7,735 g)
    0,2 M de citrate de sodium $Na_3C_6H_5O_7$ (12,9 g)

- pour le dépôt électrochimique d'une couche de cobalt : utilisation de sulfate de cobalt

    0,3 M de sulfate de cobalt $CoSO_4$ (11,6242 g)
    0,25 M d'acide borique $H_3BO_3$ (3,8643 g)

- pour le dépôt électrochimique d'une couche de cuivre : utilisation de sulfate de cuivre

0,16 M de sulfate de cuivre $CuSO_4$ (6,477 g)
0,07 M de sulfate de sodium $Na_2SO_4$ (2,4857 g)
0,31 M de citrate de sodium $Na_3C_6H_5O_7$ (19,995 g)
0,32 M d'acide borique $H_3BO_3$ (6,2264 g)

Les dépôts métalliques sont réalisés successivement selon le tableau ci-dessous :

| | Composition déposée | Taille échantillon | Succession de couches | Epaisseur | Temps d'électrodéposition (s) | Courant (mA.cm⁻²) |
|---|---|---|---|---|---|---|
| **a)** | $Co_{1,9}Mn_{1,05}Cu_{0,05}$ | 2 x 2 cm | Mn | 1,2 $\mu$m | PVD | 20 |
| | | | Cu | 0,054 $\mu$m | 29 | 20 |
| | | | Co | 1,96 $\mu$m | 1142 | 20 |
| **b)** | $Co_{1,9}Mn_{1,05}Ni_{0,05}$ | 2 x 2 cm | Mn | 1,2 $\mu$m | PVD | 20 |
| | | | Ni | 0,051 $\mu$m | 29 | 20 |
| | | | Co | 1,96 $\mu$m | 1142 | 20 |
| **c)** | $Co_{1,707}Mn_{1,147}$ $Ni_{0,073}Cu_{0,073}$ | 2 x 2 cm | Mn | 1,2 $\mu$m | PVD | 20 |
| | | | Cu | 0,073 $\mu$m | 40 | 20 |
| | | | Ni | 0,068 $\mu$m | 40 | 20 |
| | | | Co | 1,61 $\mu$m | 936 | 20 |

### 1.3. Traitement thermique

Le traitement thermique du substrat sur lequel les éléments métalliques ont été déposés est réalisé sous air. Dans un premier temps, on augmente la température depuis la température ambiante jusqu'à 900°C, avec un gradient de 1 K/min. On maintient cette température pendant 10 heures, puis on refroidit de nouveau à une vitesse de -1K/min jusqu'à la température ambiante.

### 2. Analyses MEB et EDS :

### 2.1. Produit obtenu après traitement thermique du substrat recouvert par la composition c) :

La figure 1 montre les résultats de l'analyse au microscope électronique à balayage (MEB) du produit obtenu après traitement thermique du substrat recouvert par la composition c).

La figure 2 montre les résultats de l'analyse de sélection d'énergie (*energy dispersive spectroscopy* (EDS)) du produit obtenu après traitement thermique du substrat recouvert par la composition c).

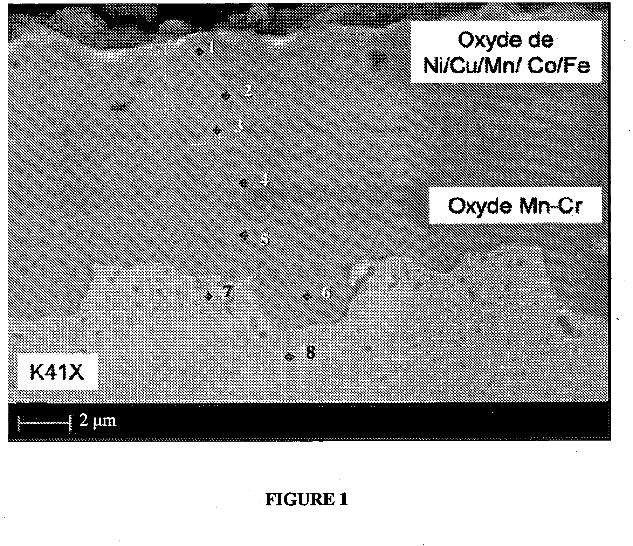

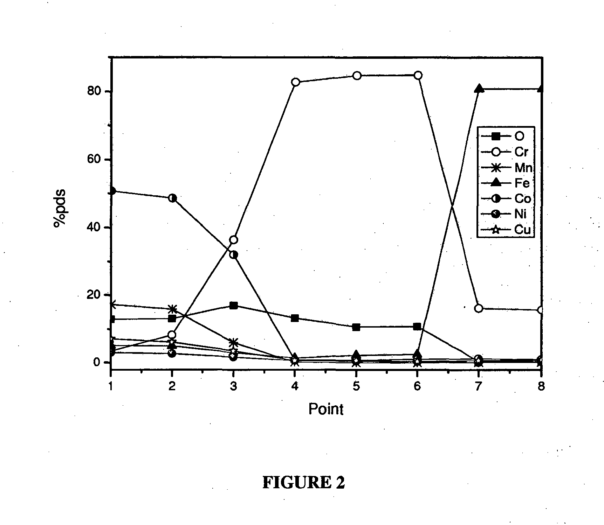

Les analyses MEB et EDS ont été réalisées de façon couplées. Les points 1 à 8 représentés sur l'image MEB (Figure 1) correspondent aux endroits où a été faite l'analyse EDS, et correspondent à l'abscisse de la Figure 2.

Les analyses MEB et EDS (Figures 1 et 2) montrent que le substrat en acier inoxydable K41X (points 7 et 8) est en contact avec une couche d'oxyde de manganèse-chrome (points 4, 5 et 6) qui s'est formée. Cette couche est elle-même recouverte par une nouvelle couche (points 1, 2 et 3) de cobalt-nickel-manganèse-cuivre-fer dense et adhérente à la couche adjacente.

On remarque que le fer provenant du substrat a diffusé pour former une nouvelle couche avec les 4 éléments (Co, Mn, Ni, Cu). On obtient un nouvel oxyde de type spinelle à 5 éléments. Le chrome ne diffuse pas dans la couche d'oxyde de manganèse-cobalt-nickel-fer.

Une analyse de diffractions des rayons X confirme que l'oxyde formé est de type spinelle monophasique.

L'oxyde reste stable dans le temps.

### 2.2. Produit obtenu après traitement thermique du substrat recouvert par la composition a) :

Le produit obtenu après traitement thermique du substrat recouvert par la composition a) a été recouvert par une couche de nickel dans le seul but de réaliser correctement les analyses MEB et EDS.

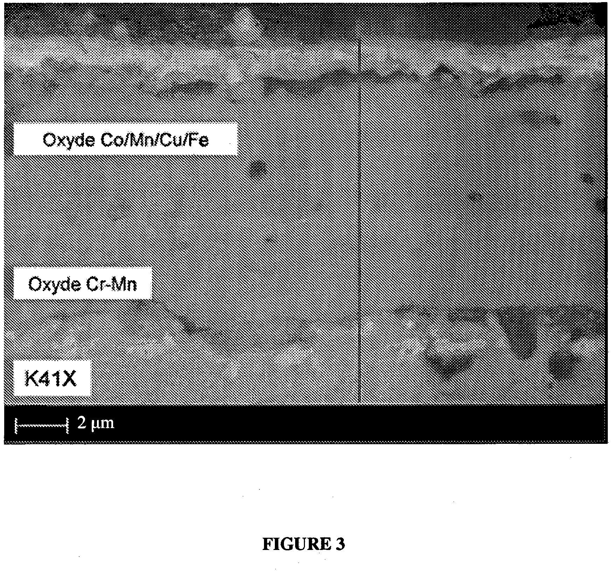

La figure 3 montre les résultats de l'analyse au microscope électronique à balayage (MEB) du produit obtenu après traitement thermique du substrat recouvert par la composition a), recouvert par une couche de nickel.

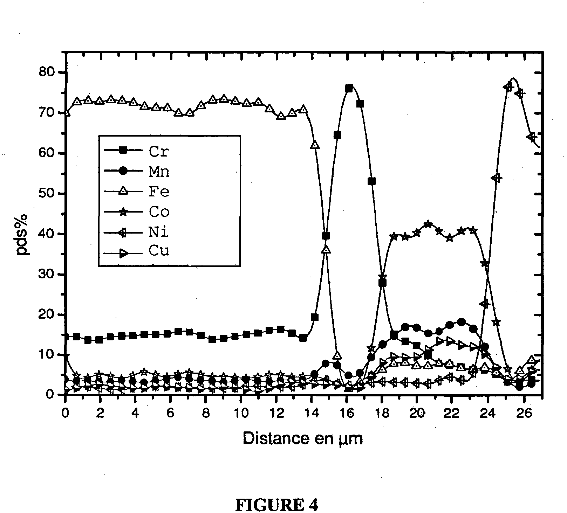

La figure 4 montre les résultats de l'analyse de sélection d'énergie (*energy dispersive spectroscopy* (EDS)) du produit obtenu après traitement thermique du substrat recouvert par la composition a, recouvert par une couche de nickel.

Les analyses MEB et EDS ont été réalisées de façon couplées. La ligne verticale grise représentée sur l'image MEB (Figure 3) correspond aux endroits où a été faite l'analyse EDS, et correspond à l'abscisse de la Figure 4, l'origine ayant été prise dans le substrat en acier K41X (en bas de l'image MEB de la figure 3).

Les analyses MEB et EDS (Figures 3 et 4) montrent la formation, en surface du substrat en acier inoxydable K41X (de 0 à environ 14 $\mu$m sur la figure 4), d'un oxyde de chrome-manganèse (d'environ 14 à environ 18 $\mu$m sur la figure 4). Cette couche est recouverte par une nouvelle couche d'oxyde de cobalt-manganèse-fer-cuivre (d'environ 18 à environ 24 $\mu$m sur la figure 4). Cette nouvelle couche d'oxyde de cobalt-manganèse-fer-cuivre présente une bonne adhérence à la couche sous-jacente, ce qui est démontré par un CET adapté.

Une analyse de diffractions des rayons X confirme que l'oxyde formé est de type spinelle monophasique.

L'oxyde reste stable dans le temps.

### 3. Mesure de la résistance spécifique surfacique (ASR) :

Les mesures ASR *(Area Specific Resistance))* permettent de caractériser la conductivité électrique de l'interconnecteur revêtu de la couche de protection. La méthode de mesure utilisée est la méthode 4 points.

Un échantillon revêtu est mis en contact avec un échantillon percé et revêtu, les deux étant séparés par une couche d'oxyde de type spinelle $(La,Sr)MnO_3$ (couche de LSM) souvent utilisé comme cathode. Un des échantillons est percé afin de laisser circuler l'air dans l'assemblage et ainsi de se rapprocher au plus près des conditions d'utilisation des interconnecteurs dans le fonctionnement des SOFC. L'intensité appliquée est de 0,5 A.cm$^{-2}$.

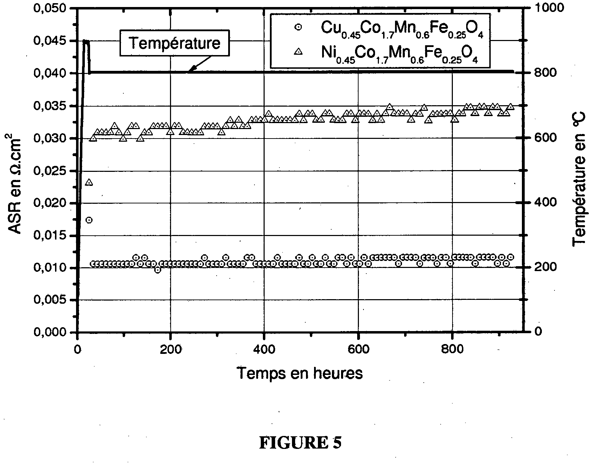

La figure 5 montre les résultats de la mesure de l'ASR, en fonction de la température,

- pour le produit obtenu après traitement thermique du substrat recouvert par la composition a),
- pour le produit obtenu après traitement thermique du substrat recouvert par la composition b).

On peut noter que la résistance spécifique surfacique de ces produits est inférieure à 35 m$\Omega$.cm$^2$, ce qui est remarquable.

Il est à noter que l'insertion entre la couche de protection et la couche de LSM d'une couche de contact de type $La_{0,8}Sr_{0,2}Co_{0,5}Mn_{0,5}O_3$ permet de diminuer encore la résistance de la couche de protection.

### Revendications

1. Interconnecteur pour pile à combustible à électrolyte solide (SOFC) ou électrolyseur haute température (EHT), comprenant un substrat en acier inoxydable revêtu d'une couche de protection non poreuse, imperméable aux espèces volatiles de chrome, ladite couche de protection étant de type spinelle et répondant à la formule (I)

$$(I) \qquad Co_{1,7+x}Mn_{0,6-x}Cu_{0,45-a}Ni_{a+b}Fe_{0,25-b}O_4$$

où $0 \leq a \leq 0,45$ et $0 \leq b \leq 0,05$ et $-0,3 < x < 0,3$, de préférence $x = 0$.

2. Interconnecteur selon la revendication 1, **caractérisé par le fait que** la spinelle répond à l'une des formules (Ia), (Ib) et (Ic) suivantes :

$$(Ia) \qquad Co_{1,7}Mn_{0,6}Cu_{0,45}Fe_{0,25}O_4,$$

$$(Ib) \qquad Co_{1,7}Mn_{0,6}Ni_{0,45}Fe_{0,25}O_4, \text{ et}$$

$$(Ic) \qquad Co_{1,7}Mn_{0,6}Cu_{0,3}Ni_{0,2}Fe_{0,2}O_4.$$

3. Interconnecteur selon l'une ou l'autre des revendications 1 ou 2, **caractérisé en ce que** ladite couche de protection a une épaisseur comprise entre 2 et 50 $\mu$m (micromètres).

4. Interconnecteur selon l'une quelconque des revendications précédentes, **caractérisé par le fait que** l'acier inoxydable présentant la composition suivante (les pourcentages étant des pourcentages massiques) :

| C | Mn | Si | Ni | Cr | N | Ti | Nb |
|---|----|----|----|----|----|----|----|
| 0 - 0,02 % | 0,1 - 2 % | 0 - 0,5 % | 0,05 -0,3 % | 14 - 24 % | 0 - 0,015 % | 0,1- 0,3 % | 0,2 - 0,6 % |

de préférence l'acier K41X produit par ArcelorMittal présentant la composition suivante

| C | Mn | Si | Ni | Cr | N | Ti | Nb |
|---|----|----|----|----|----|----|----|
| 0,02 % | 0,5 % | 0,5 % | 0,110 % | 17,5 % | 0,015 % | 0,2 % | 0,5 % |

**5.** Procédé de fabrication d'un interconnecteur selon l'une quelconque des revendications 1 à 4, **caractérisé par le fait qu'**il comprend les étapes successives suivantes :

a) le dépôt, sur un substrat en acier inoxydable, d'une ou de plusieurs couches métalliques comprenant du manganèse, du cobalt et au moins un élément choisi parmi le nickel et le cuivre, les métaux étant déposés en des quantités qui respectent les rapports en poids suivant : pour 1 partie en poids de Cu et/ou de Ni, de 12 à 18 parties en poids de Mn et de 20 à 35 parties en poids de Co, le rapport pondéral Co/Mn étant compris entre 1,6 et 2,0 ;
b) l'oxydation du dépôt effectué à l'étape (a) par traitement thermique du substrat revêtu à une température comprise entre 800°C et 1000°C, de préférence entre 840°C et 950°C, pendant une durée comprise entre 8h et 12h, de préférence entre 9h et 11h, dans une atmosphère oxydante.

**6.** Procédé selon la revendication 5, **caractérisé en ce que**, dans l'étape (a), les dépôts de manganèse, de cobalt, de nickel et/ou de cuivre sont effectués par dépôt physique en phase vapeur (PVD), par électrodéposition ou par dépôt non électrolytique.

**7.** Procédé selon l'une ou l'autre des revendications 5 ou 6, **caractérisé en ce que** le dépôt de l'étape (a) est effectué de la façon suivante :

- dépôt d'une première couche de manganèse par PVD,
- dépôt, par électrodéposition, d'une deuxième couche d'un élément choisi parmi le nickel et le cuivre,
- éventuellement dépôt, par électrodéposition, d'une troisième couche d'un élément choisi parmi le nickel et le cuivre, absent de la deuxième couche,
- dépôt d'une dernière couche de cobalt par électrodéposition.

**8.** Procédé selon l'une quelconque des revendications 5 à 7, **caractérisé en ce que** les proportions molaires des métaux déposés sont choisies parmi :

(IIa) $\quad Co_{1,9}Mn_{1,05}Cu_{0,05}$

(IIb) $\quad Co_{1,9}Mn_{1,05}Ni_{0,05}$

(IIc) $\quad Co_{1,707}Mn_{1,147}Cu_{0,073}Ni_{0,073}$

**9.** Procédé de fabrication d'un interconnecteur selon l'une quelconque des revendications 1 à 4, **caractérisé par le fait qu'**il comprend le dépôt par projection thermique utilisant une torche à plasma d'arc soufflé dans l'air sous pression atmosphérique, sur un substrat en acier inoxydable, d'une poudre d'oxyde métallique de type spinelle répondant à la formule (I) $Co_{1,7+x}Mn_{0,6-x}Cu_{0,45-a}Ni_{a+b}Fe_{0,25-b}O_4$ où $0 \leq a \leq 0,45$ et $0 \leq b \leq 0,05$ et $-0,3 < x < 0,3$, de préférence x = 0.

**10.** Pile à combustible à électrolyte solide contenant au moins un interconnecteur selon l'une quelconque des revendications 1 à 4.

**11.** Electrolyseur haute température contenant au moins un interconnecteur selon l'une quelconque des revendications 1 à 4.

12. Oxyde métallique de type spinelle répondant à la formule (I)

$$(I) \qquad Co_{1,7+x}Mn_{0,6-x}Cu_{0,45-a}Ni_{a+b}Fe_{0,25-b}O_4$$

où $0 \leq a \leq 0,45$ et $0 \leq b \leq 0,05$ et $-0,3 < x < 0,3$, de préférence x = 0.

## Patentansprüche

1. Interkonnektor für eine Festelektrolyt-Brennstoffzelle (SOFC) oder einen Hochtemperatur-Elektrolyseur (EHT), umfassend ein Substrat aus nichtrostendem Stahl, das mit einer für flüchtige Chromspezies undurchlässigen, nichtporösen Schutzschicht überzogen ist, wobei die Schutzschicht vom Spinell-Typ ist und der Formel (I) entspricht:

$$(I) \qquad Co_{1,7+x}Mn_{0,6-x}Cu_{0,45-a}Ni_{a+b}Fe_{0,25-b}O_4$$

wobei $0 \leq a \leq 0,45$ und $0 \leq b \leq 0,05$ und $-0,3 < x < 0,3$, vorzugsweise x = 0.

2. Interkonnektor nach Anspruch 1, **dadurch gekennzeichnet, dass** der Spinell einer der folgenden Formeln (Ia), (Ib) und (Ic) entspricht:

$$(Ia) \qquad Co_{1,7}Mn_{0,6}Cu_{0,45}Fe_{0,25}O_4,$$

$$(Ib) \qquad Co_{1,7}Mn_{0,6}Ni_{0,45}Fe_{0,25}O_4 \text{ und}$$

$$(Ic) \qquad Co_{1,7}Mn_{0,6}Cu_{0,3}Ni_{0,2}Fe_{0,2}O_4.$$

3. Interkonnektor nach Anspruch 1 oder 2, **dadurch gekennzeichnet, dass** die Schutzschicht eine Dicke zwischen 2 und 50 $\mu$m (Mikrometer) aufweist.

4. Interkonnektor nach einem der vorhergehenden Ansprüche, **dadurch gekennzeichnet, dass** der nichtrostende Stahl die folgende Zusammensetzung aufweist (wobei sich die Prozentangaben auf das Gewicht beziehen):

| C | Mn | Si | Ni | Cr | N | Ti | Nb |
|---|---|---|---|---|---|---|---|
| 0-0,02% | 0,1-2% | 0-0,5% | 0,05-0,3% | 14-24% | 0-0,015% | 0,1-0,3% | 0,2-0,6% |

vorzugsweise von ArcelorMittal hergestellter K41X-Stahl mit der folgenden Zusammensetzung:

| C | Mn | Si | Ni | Cr | N | Ti | Nb |
|---|---|---|---|---|---|---|---|
| 0,02% | 0,5% | 0,5% | 0,110% | 17,5% | 0,015% | 0,2% | 0,5% |

5. Verfahren zur Herstellung eines Interkonnektors nach einem der Ansprüche 1 bis 4, **dadurch gekennzeichnet, dass** es die folgenden aufeinanderfolgenden Schritte umfasst:

   a) Abscheidung einer oder mehrerer Mangan, Cobalt und mindestens ein aus Nickel und Kupfer ausgewähltes Element umfassender Metallschichten auf einem Substrat aus nichtrostendem Stahl, wobei die Metalle in Mengen abgeschieden werden, die den folgenden Gewichtsverhältnissen entsprechen: 12 bis 18 Gewichtsteile Mn und 20 bis 35 Gewichtsteile Co auf 1 Gewichtsteil Cu und/oder Ni, wobei das Co/Mn-Gewichtsverhältnis zwischen 1,6 und 2,0 liegt;
   b) Oxidation der Abscheidung aus Schritt (a) durch Wärmebehandlung des beschichteten Substrats bei einer Temperatur zwischen 800°C und 1000°C, vorzugsweise zwischen 840°C und 950°C, über einen Zeitraum zwischen 8 h und 12 h, vorzugsweise zwischen 9 h und 11 h, in einer oxidierenden Atmosphäre.

6. Verfahren nach Anspruch 5, **dadurch gekennzeichnet, dass** man in Schritt (a) die Abscheidungen von Mangan, Cobalt, Nickel und/oder Kupfer durch physikalische Gasphasenabscheidung (PVD), durch Elektroabscheidung oder durch nicht-elektrolytische Abscheidung durchführt.

7. Verfahren nach einem der Ansprüche 5 oder 6, **dadurch gekennzeichnet, dass** die Abscheidung von Schritt (a) folgendermaßen durchgeführt wird:

- Abscheidung einer ersten Schicht aus Mangan durch PVD,
- Abscheidung einer zweiten Schicht eines aus Nickel und Kupfer ausgewählten Elements durch Elektroabscheidung,
- gegebenenfalls Abscheidung einer dritten Schicht aus einem aus Nickel und Kupfer ausgewählten Element, das in der zweiten Schicht nicht vorhanden ist, durch Elektroabscheidung,
- Abscheidung einer letzten Schicht aus Cobalt durch Elektroabscheidung.

8. Verfahren nach einem der Ansprüche 5 bis 7, **dadurch gekennzeichnet, dass** die molaren Anteile der abgeschiedenen Metalle gewählt werden aus:

$$\text{(IIa)} \qquad Co_{1,9}Mn_{1,05}Cu_{0,05}$$

$$\text{(IIb)} \qquad Co_{1,9}Mn_{1,05}Ni_{0,05}$$

$$\text{(IIc)} \qquad Co_{1,707}Mn_{1,147}Cu_{0,07}3Ni_{0,073}.$$

9. Verfahren zur Herstellung eines Interkonnektors nach einem der Ansprüche 1 bis 4, **dadurch gekennzeichnet, dass** es die Abscheidung eines Pulvers aus einem Metalloxid vom Spinell-Typ, das der Formel (I) $Co_{1,7+x}Mn_{0,6-x}Cu_{0,45-a}Ni_{a+b}Fe_{0,25b}O_4$ entspricht,
wobei $0 \leq a \leq 0,45$ und $0 \leq b \leq 0,05$ und $-0,3 < x < 0,3$, vorzugsweise $x = 0$, durch thermisches Spritzen unter Verwendung eines Lichtbogenspritzplasmabrenners an der Luft unter atmosphärischen Druck auf einem Substrat aus nichtrostendem Stahl umfasst.

10. Festelektrolyt-Brennstoffzelle, die mindestens einen Interkonnektor nach einem der Ansprüche 1 bis 4 enthält.

11. Hochtemperatur-Elektrolyseur, der mindestens einen Interkonnektor nach einem der Ansprüche 1 bis 4 enthält.

12. Metalloxid vom Spinell-Typ, das der Formel (I) entspricht:

$$\text{(I)} \qquad Co_{1,7+x}Mn_{0,6-x}Cu_{0,45-a}Ni_{a+b}Fe_{0,25-b}O_4$$

wobei $0 \leq a \leq 0,45$ und $0 \leq b \leq 0,05$ und $-0,3 < x < 0,3$, vorzugsweise $x = 0$.

**Claims**

1. Interconnector for a solid oxide fuel cell (SOFC) or for a high-temperature electrolyser (EHT), including a stainless-steel substrate covered with a non-porous protective layer, impervious to volatile chromium species, said protective layer being of the spinel type and having formula (I)

$$\text{(I)} \qquad CO_{1.7+x}Mn_{0.6-x}Cu_{0.45-a}Ni_{a+b}Fe_{0.25-b}O_4$$

where $0 \leq a \leq 0.45$ and $0 \leq b \leq 0.05$ and $-0.3 < x < 0.3$, more preferably $x = 0$.

2. Interconnector according to claim 1, **characterised by** the fact that the spinel has one of the following formulas (Ia), (Ib) and (Ic):

$$\text{(Ia)} \qquad Co_{1.7}Mn_{0.6}Cu_{0.45}Fe_{0.25}O_4,$$

$$\text{(Ib)} \qquad Co_{1.7}Mn_{0.6}Ni_{0.45}Fe_{0.25}O_4, \text{ and}$$

$$\text{(Ic)} \qquad Co_{1.7}Mn_{0.6}Cu_{0.3}Ni_{0.2}Fe_{0.2}O_4.$$

3. Interconnector according to one or the other of claims 1 or 2, **characterised in that** said protective layer has a thickness between 2 and 50 $\mu$m (micrometres).

4. Interconnector as claimed in any preceding claim, **characterised by** the fact that the stainless steel has the following composition (with the percentages being percentages by weight):

| C | Mn | Si | Ni | Cr | N | Ti | Nb |
|---|---|---|---|---|---|---|---|
| 0-0.02 % | 0.1-2% | 0-0.5 % | 0.05-0.3 % | 14-24% | 0-0.015 % | 0.1-0.3 % | 0.2-0.6% |

more preferably steel grade K41X produced by ArcelorMittal having the following composition

| C | Mn | Si | Ni | Cr | N | Ti | Nb |
|---|---|---|---|---|---|---|---|
| 0.02 % | 0.5 % | 0.5 % | 0.110 % | 17.5 % | 0.015 % | 0.2 % | 0.5 % |

5. Method for manufacturing an interconnector according to any of claims 1 to 4, **characterised by** the fact that it comprises the following successive steps:

a) the deposition, on a stainless steel substrate, of one of several metal layers comprising manganese, cobalt and at least one element selected from nickel and copper, with the metals deposited in quantities that comply with the following weight ratios: for 1 part be weight of Cu and/or Ni, from 12 to 18 parts by weight of Mn and from 20 to 35 parts by weight of Co, with the Co/Mn weight ratio between 1.6 and 2.0;
b) the oxidation of the deposit carried out in step (a) by thermal treatment of the covered substrate at a temperature between 800°C and 1000°C, preferably between 840°C and 950°C, for a duration between 8h and 12h, preferably between 9h and 11h, in an oxidising atmosphere.

6. Method according to claim 5, **characterised in that**, in the step (a), the depositions of manganese, cobalt, nickel and/or copper are carried out by physical vapour deposition (PVD), by electroplating or by electroless deposition.

7. Method according to one or the other of claims 5 or 6, **characterised in that** the deposition of the step (a) is carried out in the following way:

- deposition of a first layer of manganese by PVD,
- deposition, by electroplating, of a second layer of an element selected from nickel and copper,
- possibly a deposition, by electroplating, of a third layer of an element selected from nickel and copper, absent from the second layer,
- deposition of a last layer of cobalt by electroplating.

8. Method according to any of claims 5 to 7, **characterised in that** les molar proportions of the deposited metals are chosen from among:

(IIa)  $Co_{1.9}Mn_{1.05}Cu_{0.05}$

(IIb)  $Co_{1.9}Mn_{1.05}Ni_{0.05}$

(IICA)  $Co_{1.707}Mn_{1.147}Cu_{0.073}Ni_{0.073}$

9. Method for manufacturing an interconnector according to any of claims 1 to 4, **characterised by** the fact that it comprises the deposition by thermal spraying using an arc plasma torch blown in air under atmospheric pressure, on a stainless steel substrate, of a metal oxide powder of the spinel type having the formula (I) $Co_{1.7+x}Mn_{0.6-x}CU_{0.45a}Ni_{a+b}Fe_{0.25-b}O_4$
where $0 \leq a \leq 0.45$ and $0 - b \leq 0.05$ and $-0.3 < x < 0.3$, more preferably $x = 0$.

10. Solid oxide fuel cell containing at least one interconnector according to any of claims 1 to 4.

11. High-temperature electrolyser containing at least one interconnector according to any of claims 1 to 4.

12. Metal oxide of the spinel type having the formula (I)

$$\text{(I)} \qquad Co_{1.7+x}Mn_{0.6-x}Cu_{0.45-a}Ni_{a+b}Fe_{0.25-b}O_4$$

where $0 \leq a \leq 0.45$ and $0 \leq b \leq 0.05$ and $-0.3 < x < 0.3$, more preferably $x = 0$.

**FIGURE 1**

**FIGURE 2**

Oxyde Co/Mn/Cu/Fe

Oxyde Cr-Mn

K41X

|⊢————⊣ 2 µm

**FIGURE 3**

**FIGURE 4**

**FIGURE 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y. LARRING ; T. NORBY.** Spinel and perovskite functional layers between plansee metallic interconnect (Cr - 5% wt, Fe - 1% wt, Y2O3) and ceramic (La0.85Sr0.15)0.91MnO3 cathode materials for SOFC. *Electrochemical Society,* 2000, vol. 147 (9), 3251-3256
- Reactive Coatings against Chromium Evaporation in Solid Oxide Fuel Cells. **M. ZAHID ; F. TIETZ ; D. SEBOLD ; H.P. BUCHKREMER.** Proceedings Sixth European Solid Oxide Fuel Cell Forum. 2004, vol. 2, 820-827
- **T. KIEFER ; M. ZAHID ; F. TIETZ ; D. STÖVER ; H-R. ZERFASS.** Interaction between Protective Coating and Metallic Interconnect Used for SOFC Applications. *Proceedings Seventh European Solid Oxide Fuel Cell Forum, P0803,* 2006
- Electrical and thermal properties of spinels. **H. LING ; A. PETRIC.** Electrochemical Society Proceedings. 2005, vol. 07, 1866-1873
- **BASU R.N ; N.KNOTT ; A. PETRIC.** Development of a CuFe2O4 interconnect coating. *Electrochemical Society Proceedings,* 2005, 1859-1865

- **Z. YANG ; G-G.XIA ; J. W. STEVENSON.** Mn1.5Co1.5O4 Spinel Protection Layers on Ferritic Stainless Steels for SOFC Interconnect Applications. *Electrochemical and Solid-State Letters,* 2005, vol. 8 (3), A168-A170
- **M. REZA BATENI ; P. WEI ; X.DENG ; A.PETRIC.** Spinel coatings for UNS 430 stainless steel interconnects. *Surface and Coatings Technology,* 2007, vol. 201, 4677-4684
- **MONTERO X ; F. TIETZ ; D. SEBOLD ; H.P. BUCHKREMER ; A. RINGUEDE ; M. CASSIR ; A. LARESGOITI ; I. VILLARREAL.** MnCo1.9Fe0.1O4 spinel protection layer on commercial ferritic steels for interconnect applications in solid oxide fuel cells. *Journal of Power Sources,* 2008, vol. 184, 172-179
- **Z. YANG ; G. XIA ; P. SINGH ; J. W. STEVENSON.** Electrical contacts between cathodes and metallic interconnects in solid oxide fuel cells. *Journal of Power Sources,* 2006, vol. 155, 246-252
- **T. KIEFER ; M. ZAHID ; F. TIETZ ; D. STÖVER ; H.-R. ZERFASS.** *Interaction between Protective Coating and Metallic Interconnect Used for SOFC Applications,* 2006